# EUROPÄISCHE PATENTANMELDUNG

(11) **EP 3 643 975 A1**
(43) Veröffentlichungstag der Anmeldung: **29.04.2020**
(21) Anmeldenummer: 19204090.5
(22) Anmeldetag: 18.10.2019
(51) Int. Cl.: F24F 7/10, F24F 12/00, F24F 13/06, F24F 7/00, F24F 110/70

(54) **LÜFTUNGSEINRICHTUNG FÜR INNENRÄUME VON WOHN- UND GESCHÄFTSRÄUMEN**

(30) Priorität: 24.10.2018 DE 102018126556
(71) Anmelder: Rosenkranz, Karl-Heinz, 34839 Münster (DE)
(72) Erfinder: Rosenkranz, Karl-Heinz, 34839 Münster (DE)
(74) Vertreter: Horak, Michael

(57) **Zusammenfassung**

Die vorliegende Erfindung betrifft eine Lüftungseinrichtung für Innenräume 1 von Wohn- und Geschäftsgebäuden, welche Frischluft aus der Gebäudeumgebung 15 in den Deckenbereich 17 von Innenräumen 1 leitet, und die verbrauchte Abluft durch eine Ablufteinrichtung 3 aus den Innenräumen 1 entfernt. Dabei werden die jeweiligen für Frischluft 18 und Abluft 19 mittels getrennter Luftführungskanäle 5 über einen Wärmetauscher 4 zur Wärmerückgewinnung geführt.

Erfindungsgemäß ist die Ablufteinrichtung 3 als Bodenansaugeinrichtung 6 zur Absaugung verbrauchter Luft und CO₂-Gas im Bodenbereich 12 eines Innenraumes 1 ausgebildet, wobei die Belüftungseinrichtung 2 zur Abgabe von Frischluft 18 über den Deckenbereich 17 eines Innenraumes 1 eine Frischluftansaugleitung 10 mit einem Frischlufteinlass 13 umfasst.

Zur Verbesserung der Luftqualität sind der Frischlufteinsatz 13 und der Abluftauslass 14 entfernt voneinander angeordnet.

Durch das erfindungsgemäße Verfahren zum Betrieb dieser Lüftungseinrichtung mit der Bodenabsaugung von verbrauchter Luft mit erhöhtem CO₂-Gehalt, kann die bei Sicherung gleichbleibender Luftqualität, die notwendige Luftwechselrate vermindert und Heizenergie gespart werden.

Nach dem erfindungsgemäßen Verfahren kann die Lüftungseinrichtung in verschiedenen Betriebsmodi betrieben werden, welche verschiedenen Parameter. wie etwa die Anzahl der regelmäßig anwesenden Personen und/ die eingestellten CO₂-Grenzwerte berücksichtigt.

Für Gebäude mit Feuchträumen kann die vorliegende Lüftungseinrichtung für Trockenräume mit herkömmlichen Lüftungseinrichtungen für Feuchträume kombiniert werden.

## Beschreibung

Die vorliegende Erfindung betrifft eine Lüftungseinrichtung für Innenräume von Wohn- und Geschäftsgebäuden, wie Ein- oder Mehrfamilienhäuser, öffentliche Gebäude, Büro- oder Geschäftsräume oder Veranstaltungsräume, welche zum zeitweisen oder ständigen Aufenthalt von Personen vorgesehen und ausgestattet sind, sowie ein Verfahren zum Betrieb der Lüftungseinrichtung und zur Einsparung von Heizenergie und verbesserter Raumhygiene.

Lüftungseinrichtungen sind lufttechnische Anlagen und dienen der Versorgung von Innenräumen eines Gebäudes für Wohn- oder Geschäftszwecke mit Frischluft und der Abführung der besonders durch die menschliche Atmung verbrauchten CO₂- und wasserdampfhaltigen Abluft zur Herstellung und Aufrechterhaltung eines gesunden Raumklimas.
Bekannte Lüftungseinrichtungen oder lüftungstechnische Anlagen verfügen zur Be- und Entlüftung von Innenräumen meist über getrennte Luftführungen für die unterschiedlich temperierte Zu- und Abluft, sowie eine Wärmerückgewinnung zur Wärmeübertragung und Einsparung von Heizenergie.

Dezentrale Anlagen für Einzelräume werden oft in einstückiger Bauform erstellt und etwa in das Mauerwerk eines Gebäudes integriert, dabei vereinen sie meist alle wesentlichen Betriebskomponenten, wie auch die jeweiligen Luftführungskanäle in einem Gehäuse.
Bei bekannten Lüftungseinrichtungen erstrecken sich die getrennten Luftführungskanäle, vorzugsweise an Wänden, Decken und Böden in das zu belüftende Raumvolumen hinein. Das überwiegend verwendete Verfahren beinhaltet das Einblasen von Frischluft sowie das Abziehen der verbrauchten Luft, erfolgt in der Deckenkonstruktion. Bei neueren Verfahren wird die Frischluft dabei über geeignete Bodenauslässe in den Innenraum geführt, während die Abluftansaugung im Deckenbereich erfolgt.

Das Raumklima und das Wohlbefinden von Personen in Innenräumen von Gebäuden sind wesentlich von der dortigen Luftqualität abhängig. Dabei wird die Luftqualität besonders durch die im Raum befindliche Personenzahl und deren Aufenthaltsdauer und Tätigkeit bestimmt, sowie die Raumgröße bezogen auf den Flächeninhalt. Neuere Erkenntnisse durch Raumluftmessungen zeigen, dass sich die Raumgröße (Raumhöhe), bezogen auf die CO₂-Verteilung, nicht so gravierend auswirkt.

Wie aus zahlreichen Untersuchungen bekannt ist, spielt der Anstieg des CO₂-Gehalts über bestimmte Grenzwerte hinaus in der Innenraumluft eine besondere Rolle für das Wohlbefinden von Personen und das wahrgenommene Raumklima. Der Mensch (und andere Lebewesen) selbst, mit seinen verschiedenen Ausdünstungen, wie Wasserdampf, Geruchsstoffe, Gase und besonders der durch die Atmung verursachten CO₂-Anstieg, ist eine wesentliche Ursache für die Änderung der Luftqualität in Innenräumen.
Weitere Faktoren aus der menschlichen Nutzung (Hautschuppen, Nahrungspartikel, Keime, Staub und von außen luftgetragene und eingetragene anhaftende Partikel) sowie die bauliche Umgebung der Belüftungsinnenräume kommen durch externe Feinstaubbelastungen bei ungünstigen verkehrsnahen Wohnlagen hinzu und sollten bei der Luftführung berücksichtigt werden. Dazu kommen noch Ausgasungen aus Mobiliar, Textilien, Reinigungsmittel, Baumaterialien usw.
Allgemein ist jedoch der CO₂-Anteil in der Atemluft als wesentlicher Parameter für die Beurteilung der Luftqualität in Innenräumen anzusehen und spielt deshalb für die Einstellung des Luftvolumenstromes von Lüftungseinrichtungen eine entscheidende Rolle.
Daher verwenden zahlreiche bekannte Lüftungseinrichtungen- und lüftungstechnische Anlagen den CO₂-Anteil in Innenräumen als Einstellparameter für die Erzeugung und Aufrechterhaltung eines für Menschen angenehmen Innenraumklimas.

Ein geeignetes Maß hierfür ist die anlagentechnisch hauptsächlich regelbare Luftwechselrate für ein bestimmtes Raum- oder Gebäudevolumen.
Die Luftwechselrate gibt das Vielfache des Raumvolumens an, welches dem betrachteten Raum in Form von Frischluft zugeführt, und von Abluft abgeführt werden muss und bestimmt sich wesentlich durch den in Verbindung mit den durch die in den Innenräumen befindliche Personenzahl erzeugten CO₂-Anteil. Entsprechend richtet sich die Luftwechselrate nach der zeitlichen Änderung der Luftqualität und ist durch die Lüftungseinrichtung entsprechend anzupassen.
Bei einer normalen atmosphärischen CO₂-Konzentration von 350 ppm in der Umgebung von Gebäuden, wurde etwa in Wohngebäuden eine durchschnittliche CO₂-Konzentrationen von ca. 400 - 700 ppm (730 - 1 280 mg/m³) gefunden, welche aber im Tagesverlauf stark variieren kann (Keskinen et al. 1987).

Da neben der Luftqualität auch die Raumtemperatur ein wichtiger Parameter für ein angenehmes Raumklima ist, kommt deren Erzeugung und Aufrechterhaltung durch Heiz- Klima- und Lüftungseinrichtungen ebenfalls eine besondere Bedeutung zu. Darüber hinaus ist es aus energetischen Gründen wünschenswert, die Heizenergiekosten so gering wie möglich zu halten und Wärmeverluste, etwa durch die Gebäudehülle und deren Öffnungen zu minimieren.
Moderne Gebäudehüllen sind daher oft mit einer guten Wärmedämmung versehen und in energiesparender und dichter Bauweise erstellt.
Daher ist der natürliche Gasaustausch der Innenräume mit der Frischluft der Gebäudeumgebung auf ein Minimum reduziert, was wiederum zu einem Anstieg des CO₂-Gehalts durch Personen führt und einem guten Raumklima widerspricht.
Eine regelmäßige Frischluftzufuhr für Innenräume ist demzufolge unerlässlich.

Das übliche manuelle Öffnen der Fenster, als notwendige Raumbelüftung, führt allerdings zu unkontrollierten Wärmeverlusten und einem erheblichen Mehrverbrauch an Heizenergie.
Demgegenüber bieten moderne Lüftungseinrichtungen mit Wärmerückgewinnung den Vorteil, dass die in der Abluft enthaltene Wärme durch Wärmetauscher auf die Frischluftzuführung übertragen wird.
Diese Art der Wärmerückgewinnung wird allgemein häufig angewendet und ermöglicht es derartigen Lüftungsanlagen mit geringen Wärmeverlusten die Abluftwärme auf die kühlere Frischluft zu übertragen und zur Raumtemperierung und Heizkosteneinsparung zu nutzen.

Generell können Lüftungseinrichtungen als zentrale Lüftungsanlage für die Belüftung mehrerer Innenräume in einem Gebäude oder auch als dezentrale Lüftungsanlagen für einzelne Innenräume ausgebildet sein.
Je nach Gebäudegröße und Verwendungszweck sind verschiedene Arten und Ausführungsformen von lüftungstechnischen Anlagen bekannt und in der Fachliteratur beschrieben.
Dezentrale, vorwiegend raumweise verbaute Lüftungseinrichtungen eignen sich zusätzlich auch zur Nachrüstung in Innenräumen von Altbauten.

Bei einer Vielzahl von bekannten Lüftungseinrichtungen finden sich vergleichbare Baugruppen und Anlagenkomponenten, wie etwa eine Frischluft- und Abluftführung in getrennten Luftführungskanälen durch einen Wärmetauscher oder Ventilatoren zur Erzeugung des jeweiligen Luftvolumenstroms.
Zum Schutz der Anlagenkomponenten gegen Verschmutzung, wie Staub und Ungeziefer werden häufig Filtereinheiten, Lüftungsklappen und Lüftungsgitter verwendet.
Die Steuerung und Einstellung derartiger lüftungstechnischer Anlagen erfolgt in der Regel durch eine zentrale Steuereinheit mit Bedienfeld für den Benutzer, welche je nach Ausführung mit zusätzlichen Gas-, Feuchtigkeit- und/oder Temperatursensoren zur Erfassung der relevanten Parameter ausgestattet sind.
Die ermittelten Gasparameter können etwa in die Steuerung des Automatikbetriebs einfließen oder zusätzliche Einstellhinweise für die Bedienung durch den Nutzer liefern.
Lüftungsanlagen jeder Art unterliegen einer ständigen Weiterentwicklung.
Ziel dieser Weiterentwicklungen ist meist die Verbesserung und Stabilisierung der Atemluftqualität und eine geräuscharme und energiesparende Betriebsweise.

So ist aus der DE102016105305A1 eine einstückig ausgebildete Innenraumlüftungsanlage für den Wandeinbau bekannt, welche innerhalb ihres Gehäuses einen internen Zuluftkanal zur Zuführung von Frischluft und einen internen Abluftkanal zum Abführen von Abluft in die Außenumgebung aufweist. Das Ziel dieser Erfindung ist unter anderem die schnelle Reduktion von Feinstaub und ein geringer Volumenstrom zur Belüftung von Innenräumen.

Dazu wird die Anordnung einer Mischkammer mit einem Luftreinigungselement vorgeschlagen, welche mit dem Zuluftkanal und einem Umluftkanal verbunden ist. Der Umluftkanal steht wiederum mit dem Innenraum in Verbindung und führt die verunreinigte Raumluft mittels Umluftventilator zur Filterung in die Mischkammer.
In der Mischkammer werden Frischluft und Umluft gemischt, wobei der Umluftanteil regelbar ist. Zur Überwachung der Luftqualität ist ein Luftqualitätssensor vorgesehen. Weiterhin ist ein Drucksensor vorgesehen, welcher für den Innenraum einen leichten Überdruck steuert, um das Eindringen verschmutzter Luft durch die Fensterritzen zu vermeiden. Frischluftkanäle oder Abluftkanäle, welche sich zum Luftaustausch in das Volumen des Innenraums erstrecken, werden nicht beschrieben.
Auch wenn bei dieser bekannten Innenraumlüftungsanlage Feinstäube wirksam gefiltert werden, dürfte das die Luftqualität nur bedingt verbessern, da der Anstieg der CO₂-Konzentration hier unberücksichtigt bleibt. Zu einer Verminderung der Luftwechselrate und damit zu einer verbesserten Wärmebilanz werden keine Angaben gemacht.

In dem deutschen Patent DE10 2011002734B4 wird ebenfalls eine einstückig ausgebildete Lüftungsvorrichtung zum Einbau in eine Gebäudehülle (Mauerwerk, Mauerkasten) beschrieben, welche zum Austausch von Luft zwischen dem Gebäudeäußeren und dem Gebäudeinneren ausgebildet ist. Diese Lüftungsvorrichtung umfasst in einem einzigen Gehäuse einen Wärmetauscher zur Wärmeübertragung zwischen den beiden Luftaustauschströmen, auch Messvorrichtungen für die Luftfeuchtigkeit und den CO₂-Gehalt des Innenraums. Luftfeuchte und CO₂-Gehalt werden als Parameter erfasst und dienen als zusätzliche Regelgröße für den vom Nutzer einzustellenden Luftaustausch. Dabei wird der Luftaustausch durch einen einstellbaren Komfortparameter geregelt, in den die ebenfalls vom Benutzer einstellbaren Abweichungsvorgaben für relative Luftfeuchte und CO₂-Gehalt einfließen und als Regelgrößen verwendet werden. Zusätzlich sollen auch die Außenfeuchtigkeit, die Heizperiode und der Tag-/Nacht-Zyklus als Parameter in die Regelung der Lüftungsanlage einfließen. Trotz der zahlreichen zu berücksichtigenden Regelgrößen, wird als Erfindungsziel, eine einfache Bedienung und eine Erhöhung des Wirkungsgrads angegeben. Luftführungskanäle in das Innenraumvolumen sind nicht vorgesehen.

Als weiteres Merkmal ist ein Direktlüftungsbetrieb unter Umgehung des Wärmetauschers vorgesehen, welcher den Frischluftstrom direkt in den Innenraum leitet. Hierbei dürften jedoch besonders in der kalten Jahreszeit für diese offenbarte Lüftungsvorrichtung unerwünscht größere Wärmeverluste auftreten.

Weiterhin gilt für viele Heizungssysteme in Wohneinheiten allgemein die Tatsache, dass der konvektive Luftanteil in der Regel rasch nach oben in Richtung Zimmerdecke geleitet wird.
Wenn dann die bekannten Lüftungssysteme die Luft nach oben hin absaugen, wird die Luft- und Wärmeableitung hierdurch noch beschleunigt. Um diese rasch abfließende Wärme für den Nutzer auszugleichen, werden solche Lüftungssysteme entweder entsprechend niedriger geschaltet oder der Wärmestrom des Heizungssystems wird erhöht.

Auch weitere bekannte Lüftungseinrichtungen verfügen über getrennte Luftführungskanäle für Frischluft und Abluft, welche mit entsprechenden Luftauslässen in Raumböden und Ansaugeinrichtungen in Decken von Innenräumen geführt sind.
So ist etwa in der AT508645B1 eine Wohnraumlüftungsanlage zur zentralen Belüftung von Wohnhäusern angegeben, in welcher ein Hauptzuluftleitungsstrang nach einer Wärmetauschvorrichtung in zwei oder mehrere Raumzuluftleitungsstränge übergeht und Frischluft in verschiedene Innenräume transportiert.
Die Einspeisung der Frischluft über Lüftungskanäle in die zu belüftenden Innenräume erfolgt über Bodenauslässe, welche etwa in der EP2735810B1 oder DE19604504A1 beschrieben sind.

Aufgabe der vorliegenden Erfindung ist es, Wärmeverluste durch eine Lüftungseinrichtung weitgehend zu vermindern und eine für Menschen angenehme Innenraumatmosphäre in Wohn- und Geschäftsgebäuden mit gleichbleibend hoher Luftqualität zu schaffen und zuverlässig aufrecht zu erhalten.
Dabei solle der Betrieb der Lüftungseinrichtung sauber und energiesparend sein.

Diese Aufgabe wird durch die kennzeichnenden Merkmale der Ansprüche 1 und 4 in Verbindung mit deren Oberbegriff gelöst.

In den weiteren Unteransprüchen sind vorteilhafte Ausgestaltungen der Erfindung angegeben.

Die erfindungsgemäße Lüftungseinrichtung dient vorzugsweise der zentralen Belüftung von Innenräumen von Gebäuden oder als dezentrale Lüftungseinrichtung zur Belüftung von einzelnen Innenräumen eines Gebäudes und der Abführung verbrauchter Luft in den Gebäudeaußenbereich. Dabei sind zentrale Anlagenkomponenten, wie etwa die Steuerung, Wärmetauscher, Filter und Ventilatoren für Zu- und Abluft bei mehrgeschossigen Gebäuden vorzugsweise in einem Obergeschoss angeordnet, da die dortige Frischluft schon weniger CO₂ enthält und die Abluft durch die stärkere Strömung an Steildächern besser abgeführt werden kann.

Dabei verfügt die Lüftungseinrichtung erfindungsgemäß über eine Belüftungseinrichtung zur Einleitung von Frischluft aus dem Gebäudeaußenbereich in den Deckenbereich eines, oder mehrerer Innenräume und deren Abgabe über mindestens einen Frischluftauslass, sowie eine als Bodenabsaugeinrichtung ausgebildete Ablufteinrichtung zur Absaugung von verbrauchter Luft und CO₂-Gas aus dem bodennahen Bereich von Innenräumen.
Dabei sind die getrennt geführten Luftführungskanäle als Frischluftkanäle und Abluftkanäle ausgebildet, deren Anzahl und Führung in den Innenräumen von deren Geometrie, der Nutzung und der Anzahl der sich darin aufhaltenden Personen abhängt.

Die erfindungsgemäße Bodenabsaugung von Abluft mit hohem CO₂-Gehalt nutzt die größere Dichte von CO₂ als die der Atemluft aus, was eine erhöhte CO₂-Konzentration im Bodenbereich von Innenräumen bewirkt. Gemäß diesem neuartigen Lüftungskonzept der Bodenabsaugung, wird das in Bodennähe von Innenräumen konzentrierte CO₂-Gas bedeutend schneller und wirkungsvoller abgesaugt und durch Frischluft mit einem geringen CO₂-Gehalt über Deckenauslässe in Innenräumen ersetzt.
Durch diese effektivere Verminderung der CO₂-Konzentration in Innenräumen, kann die erforderliche Luftwechselrate zur Sicherung der Luftqualität erfindungsgemäß erheblich herabgesetzt werden.
Bisher übliche Wärmeverluste aufgrund des erforderlichen höheren Volumenstroms beim Luftaustausch werden ungeachtet der Wirksamkeit der eingebauten Wärmerückgewinnung durch die vorliegende Erfindung zusätzlich vermindert.
Da sich leichtere warme Atemluft in Innenräumen vorwiegend im Deckenbereich ansammelt, die Abluftabsaugung aber im Bodenbereich erfolgt, ist die CO₂-belastete Abluft auch deutlich kühler, als bei den bisherigen Deckenabsaugungen vorbekannten Lüftungseinrichtungen, was erfindungsgemäß zu einer zusätzlichen Einsparung von Heizenergie führt.

Da die erfindungsgemäße Lüftungseinrichtung sowohl für Einzelräume, als auch mehrere Räume in mehrgeschossigen Häusern eingebaut werden kann, lassen sich die Anzahl und der Verlauf der Abluftkanäle entsprechend den Erfordernissen und der Geometrie des Innenraums anpassen, über geeignete Kanalverteiler führen und in den Innenraumboden oder in den unteren Wandbereich (Bodenbereich) integrieren.
Entsprechende Abluftansaugeinsätze an den Ansaugenden der Abluftkanäle sind mit Filterelementen zur Verhinderung der Anlagerung von Stäuben in den Abluftkanälen versehen.
Erfindungsgemäß werden der Abluftauslass und der Frischlufteinlass ausreichend entfernt voneinander angeordnet, damit sich Abluft und Frischluft mit ihren unterschiedlichen CO₂-Konzentrtionen und Luftbestandteilen nicht vermischen. Dazu wird vorgeschlagen, die im Bodenbereich der belüfteten Innenräume angesaugte Abluft, insbesondere dann, wenn die Lüftungseinrichtung in einem Obergeschoss verbaut ist, über die erhöhte Luftströmung der Dachfläche abzuführen.

Diese neue erfinderische Lüftungseinrichtung und deren Betriebskonzept, betreibt gegenüber dem Betriebskonzept bekannter Lüftungsanlagen ein regelrecht anderes Verfahren zu Luftführung, bei dem die Frischluftzufuhr über den Deckenbereich im Gegenstrom die warme Luft des Innenraumes am Aufsteigen behindert und somit dem Nutzer einer Wohneinheit zur Energieeinsparung bei verbesserter Raumluft verhilft.
Die Erfindung betrifft weiterhin ein Verfahren zur Einsparung von Heizenergie durch den Betrieb der erfindungsgemäßen Lüftungseinrichtung.

Die Erfindung soll nun anhand von zwei Figuren und Ausführungsbeispielen näher erläutert werden.
Es zeigen:
Fig. 1 die Anordnung der Lüftungseinrichtung für einen Innenraum 1,
Fig. 2 die Anordnung der Lüftungseinrichtung im Obergeschoß eines mehrgeschossigen Gebäudes.

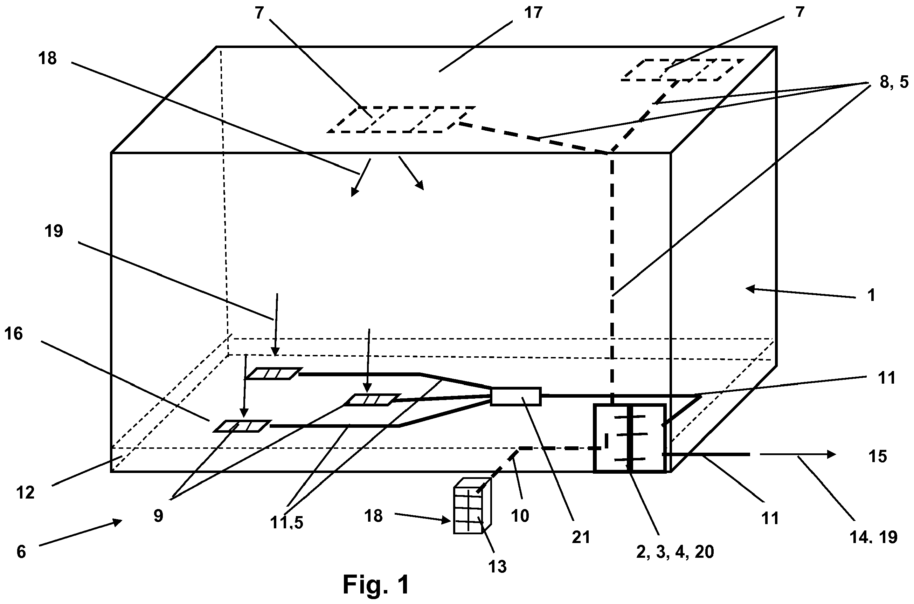

Das erste Ausführungsbeispiel bezieht sich auf die in Fig.1 dargestellte Lüftungseinrichtung für einen Innenraum 1 eines Gebäudes.
Zentrale Komponenten der erfindungsgemäßen Lüftungseinrichtung, wie die Belüftungseinrichtung 2 für Frischluft und die Ablufteinrichtung 3 für Abluft sind gemeinsam mit dem Wärmetauscher 4 in einem Gehäuse der Steuereinheit 20 zum vorzugsweisen Wandeinbau untergebracht. Sowohl die erfindungsgemäß im Bodenbereich 12, insbesondere im Fußboden 16 integrierten Abluftkanäle 11, wie auch die im Deckenbereich 17 geführten Frischluftkanäle 8, werden durch die als Kreuzwärmetauscher 4 ausgebildete Wärmetauscheinrichtung 4 zur Wärmeübertragung gelegt. Dabei ist unter dem Begriff Bodenbereich 12 sowohl der untere Raumbereich der Wände, wie auch der Fußboden 16 zu verstehen. Ebenso beschreibt der Deckenbereich 17 des Innenraums 1 die Raumdecke selbst und dessen obere Seitenwandabschnitte.
Der zum Wärmetauscher 4 im Boden 16 geführte zentrale Abluftkanal 11 spaltet sich zu den jeweiligen Abluftansaugeinsätzen 9 in drei einzelne Abluftkanäle 11 auf. Hierdurch wird es möglich, die bodennahe CO₂-belastete Abluft an verschiedenen bevorzugten Stellen im unteren Bereich des Innenraums aufzunehmen und über den als Kreuzwärmetauscher 4 ausgebildeten Wärmetauscher in eine entferntere Gebäudeumgebung abzuführen (außerhalb des Gebäudes).

Die Anordnung der Abluftkanäle 11 erfolgt je nach Größe, Nutzung und der Anzahl der Personen im Innenraum 1, durch einen oder mehrere Abluftansaugeinsätze 9.

Im Gehäuse des jeweiligen Abluftansaugeinsatzes 9 ist erfindungsgemäß eine Filterkassette angeordnet, welche die Ansammlung von Stäuben oder Verschmutzung in den Abluftkanälen 11 verhindert. Dabei wird der Abluftansaugeinsatz 9 im Fußboden 16 durch eine Blende mit zahlreichen Luftschlitzen abgedeckt.

Die Frischluftansaugleitung 10 ist mit einem Frischlufteinlass 13 verbunden, welcher die Frischluft durch einen Luftfilter, insbesondere eine Filterkassette vor eindringenden Verschmutzungen schützt und das Eindringen von Stäuben in den Kreuzwärmetauscher 4 verhindert.
Auch die aus der Gebäudeumgebung 15 angesaugte Frischluft (Zuluft) wird, etwa durch eine Filterkassette gefiltert und ausreichend entfernt von dem Abluftauslass 14 angeordnet. Durch diese räumliche Trennung von Frischlufteinlass 13 und Abluftauslass 14 wird eine Vermischung von Frischluft 18 mit der Abluft 19 verhindert und ein niedriger CO₂-Anteil in der Frischluft gesichert.

Die mittels Ventilator in der Zentraleinheit 20 angesaugte Frischluft 18 wird über den Kreuzwärmetauscher 4 zur Vorwärmung geführt und übernimmt die in der Abluft 19 enthaltene Wärme.

Erfindungsgemäß werden ein- oder mehrere Frischluftkanäle 8 in den Deckenbereich 17 zu den dort angeordneten Frischluftauslässen 7 geführt. Die Frischluftauslässe 7 sind vorzugsweise als Tellerventil zur Abgabe der Frischluft ausgebildet.

In einer bevorzugten Ausführungsform ist mindestens ein Frischluftauslass 7 zentral in der Mitte des Deckenbereichs 17, vorzugsweise in der Raumdecke angeordnet. Da sich besonders im Deckenbereich 17 die warme Raumluft ansammelt und die kühlere Frischluft 18 schwerer als die unter der Raumdecke befindliche Raumluft ist, erfolgt durch das Absinken der Frischluft 18 durch die warme Raumluft 19 eine weitere Erwärmung der Frischluft 18 in den Aufenthaltsbereich von Personen. Hierdurch werden Wärmeverluste durch Lüftung weiter vermindert und ein erfrischendes, angenehmes Raumklima erzeugt.

In einer weiteren bevorzugten Ausführungsform sind alle Luftführungskanäle 5, sowie deren Frischluftauslass 7 und der Abluftansaugeinsatz 9 in die Raumdecke oder den Fußboden 16 des Innenraums 1 integriert, und wenn notwendig, mit entsprechenden Luftfiltern und Lüftungsgittern/Blenden versehen, um insbesondere auch die Keimbelastung in der Raumluft zu vermindern. Der Einbau der Luftführungskanäle 5, sowie deren Auslass- und Ansaugeinsätze 7, 9 können jedoch auch im jeweiligen unteren oder oberen Wandbereich verbaut und integriert sein.

In einer bevorzugten Ausführungsform sind ein- oder mehrere CO₂-Sensoren angeordnet, welche den CO₂-Gehalt in einem oder mehreren Innenräumen 1 kontinuierlich oder in bestimmten Abständen messen und an die Steuereinheit 20 zur Steuerung der Lüftungseinrichtung oder Information für den Benutzer übermitteln.

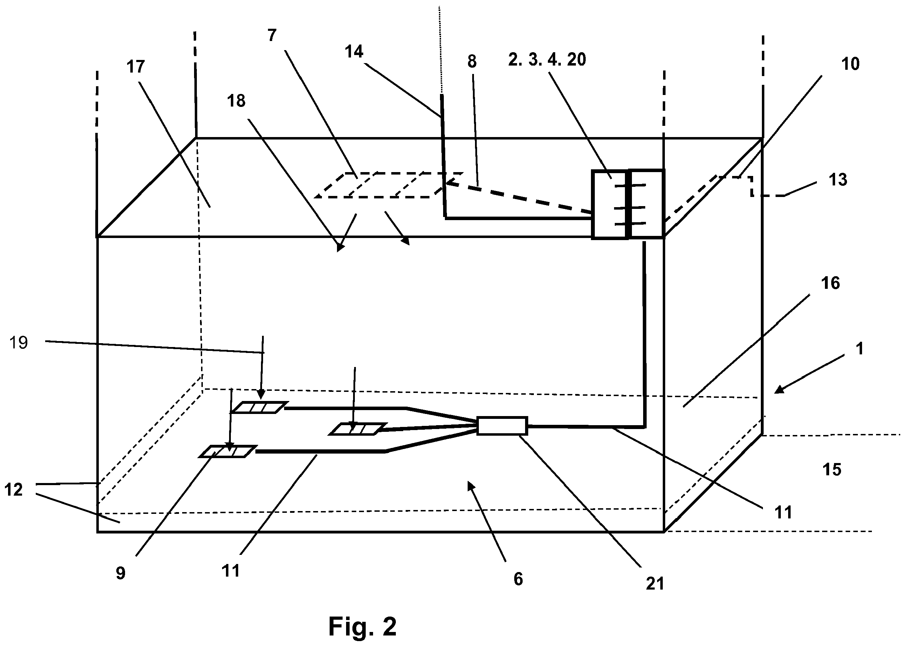

Ein weiteres Ausführungsbeispiel betrifft die Ausführung der Lüftungseinrichtung für Innenräume 1 in einem mehrgeschossigen Gebäude, wie in Fig. 2 dargestellt. Die Anordnungen und Funktionen der einzelnen Komponenten sind hier ähnlich wie in der Beschreibung zu Fig. 1.
Im Unterschied hierzu befinden sich die zentralen Komponenten der Lüftungseinrichtung dieser bevorzugten Ausführungsform, wie die Steuereinheit 20 mit Wärmetauscheinrichtung 4, Ventilatoren, Luftfilter und Teile der Luftführungskanäle 5 im Obergeschoß eines Gebäudes.
Entsprechend sind die Leitungsverläufe der Luftführungskanäle 5 an die Gebäudeabmessungen und Innenraum Geometrien angepasst.
Durch die über dem Gelände erhöhte Anordnung des Frischlufteinlass 13 wird schon Frischluft mit einem verminderten CO₂-Gehalt angesaugt und über ein Tellerventil als Frischluftauslass 7 in den Deckenbereich 17 abgegeben.

Die Anordnung in einem Obergeschoss erlaubt ferner, die einfache Führung des vom Wärmetauscher 4 ausgehenden Abluftkanals 11 zum Abluftauslass 14 über Dach und eine zügige Abführung der CO₂ belasteten Abluft 19 über die Dachfläche (nicht dargestellt) durch die dortig stärkeren Windströmungen.

Das erfindungsgemäße Verfahren zum Betrieb der vorbeschriebenen Lüftungseinrichtung beinhaltet insbesondere die Absaugung der verbrauchten Abluft 19 aus dem Bodenbereich 12 eines Innenraums 1 und die Zuführung von Frischluft 18 über den Deckenbereich 17 des belüfteten Innenraums 1. Durch die erfinderische Bodenabsaugung der Abluft und die dadurch ermöglichte schnelle Verminderung von CO₂ in Innenräumen 1, in Verbindung mit der erfinderischen Frischluftzuführung über den Deckenbereich 17, werden geringere Luftwechselraten bei mindestens gleicher Luftqualität für Personen ermöglicht. Der dadurch geringere Luftwechsel-Volumenstrom zwischen kühlerer äußerer Umgebung und wärmerer innerer Raumluft 1, erlaubt signifikante Einsparungen von Heizenergie.
Wie schon beschrieben, sollte die Frischluftzuführung aus einer CO₂-armen Umgebung (Frischlufteinlass 13, Fig. 2), und natürlich ausreichend beabstandet vom Abluftauslass 14 erfolgen.
Erfindungsgemäß wird die Abluft über die Dachfläche in die Gebäudeumgebung 15 geführt.

Die in der Steuereinheit 20 implementierte Steuerung der Lüftungseinrichtung ist an ein Bedienfeld gekoppelt und für verschiedene Betriebsmodi ausgelegt, welche durch den Nutzer über das Bedienfeld gewählt werden können oder im Automatikbetrieb durch das System ausgewählt werden.
Die erfinderische Lüftungseinrichtung kann dadurch leicht an die Nutzung der Innenräume angepasst werden.

In einer bevorzugten Ausführungsform der Erfindung ist ein Regel-Betriebsmodus vorgesehen, welcher bei bekannter Personenzahl, Nutzung und Raumgröße den Normalfall für diese, daraus abgeleitete Grundeinstellung darstellt. Dabei sind die Parameter für diese Grundeinstellung der Lüftungseinrichtung derart gewählt, dass ein Anstieg des CO₂-Gehalts über den festgelegten Grenzwert hinaus unterbleibt. Bei Abweichungen vom Normalbetrieb, etwa durch übermäßige Nutzung oder eine Familienvergrößerung mit mehr Personen in den Innenräumen 1, schaltet die Steuerung in einen entsprechend anderen Betriebsmodus und erhöht oder vermindert etwa die Luftwechselrate aus der Grundeinstellung zur dauerhaften Aufrechterhaltung der Luftqualität. Die Umschaltung in einen anderen Betriebsmodus erfolgt insbesondere dann, wenn durch das oder die mit der Steuereinheit 20 verbundenen CO₂-Messgeräte, welche insbesondere auch als Datenlogger ausgebildet sind, von der Norm abweichende CO₂-Messwerte an die Steuereinheit 20 geliefert haben.

In einer weiteren bevorzugten Ausführungsform wird der Betrieb der erfindungsgemäßen Lüftungseinrichtung in der Grundeinstellung permanent aufrechterhalten. Dadurch kann sich das CO₂, welches vorwiegend aus der Atemluft der Nutzer stammt, nicht mit dem ebenfalls von den Nutzern stammenden H₂O zu H₂CO₃ (Kohlensäure) verbinden. Dies würde aber geschehen, wenn die Anlage nur ab einem gewissen Schwellenwert von CO₂ eingeschaltet und bei dessen Unterschreitung wieder abgeschaltet würde.
Die sich sonst bildende Kohlensäure gilt als weiterer Auslöser für Schimmelbildung in Gebäuden, welche zum dauernden Aufenthalt von Menschen dienen.

Eine weitere bevorzugte Ausführungsform der erfindungsgemäßen Lüftungseinrichtung betrifft komplette Gebäude, die zum dauernden Aufenthalt von Menschen dienen und Feuchtinnenräume aufweisen.
Erfindungsgemäß kann hier für alle Trockenräume die angegebene Lüftungseinrichtung zum Einsatz kommen, für alle Feuchtinnenräume, wie Küche und Bad werden die bekannten klassischen Lüftungssysteme verwendet.

In Feuchtinnenräumen überwiegt der Wasserdampf (H₂O-Anteil) den von CO₂, bedingt durch die menschliche Atmung und durch die zusätzliche Haushaltsnutzung von Wasser in jedem Aggregatzustand (Duschen, Kochen usw.). In diesen Feuchtinnenräumen sammelt sich die mit Wasserdampf zusammen mit CO₂ belastete Abluft am höchsten Punkt des Raumes unter der Decke, da feuchte Luft leichter ist als trockene Luft.

Die Frischluft wird in dieser Weiterbildung der Erfindung, etwa über Wandkanäle und hinter der Heizung zugeführt.
Erfindungsgemäß kommen in kompletten Gebäuden mit Feucht- und Trockeninnenräumen zusätzlich zu der vorgeschlagenen Lüftungseinrichtung, verschiedene weitere Lüftungseinrichtungen anderer Bauart zum Einsatz.

Ein wesentlicher Vorteil der vorliegenden Erfindung besteht insbesondere in der Möglichkeit, durch den Betrieb der erfindungsgemäßen Lüftungseinrichtung eine verminderte Luftwechselrate durch ein schnelles Auslüften von CO₂-Gas in dem belüfteten Raumvolumen von einzelnen Innenräumen und kompletten Gebäuden zu realisieren. Hierdurch werden die Wärmeverluste aufgrund der erforderlichen Lüftung minimiert und tragen zur Reduzierung der Heizkosten bei.
Dabei werden durch das erfindungsgemäße Verfahren für den Belüftungsvorgang eine geringere Luftmenge und damit auch eine geringere Luftwechselrate benötigt. Die erreichbare Luftwechselrate liegt dabei noch unter den gesetzlichen Vorgaben, etwa der Lüftungs-DIN, oder der Empfehlung des Bundesumweltamtes, ohne einer Verminderung der Luftqualität.
Der notwendige geringere Frischluft-Volumenstrom verlangsamt die einströmende kühlere Luft über die Raumdecke und hat dadurch eine größere Verweildauer, um die aufgestaute Wärme über den Köpfen der Bewohner zu übernehmen und in die Höhenluftschicht der Bewohner zu gelangen.

Durch die Implementierung mehrerer Betriebsmodi in die Steuerung der Lüftungseinrichtung zur Einstellung der Luftwechselrate zur effektiven Verminderung des CO₂-Gehalts und der bevorzugten Ausführungsform einer permanent betriebenen Grundeinstellung für ein bestimmtes, an die Raumnutzung angepasstes CO₂-Niveau, wird eine dauerhaft gute Luftqualität gesichert.

Die erfinderische Lüftungseinrichtung mit der Neuanordnung der Abluftführung in Bodennähe im Zusammenwirken mit der über den Wärmetauscher vorgewärmten Frischluft, sowie dem physikalischen Verhalten, dass kühlere Luft schwerer als warme Luft ist und sich unter Aufnahme der unter der Raumdecke befindlichen Wärme schneller nach unten bewegt, erzeugt für die Bewohner ein signifikantes, erfrischendes, wohltuendes Klima.
Diese Luftqualität wird zusätzlich durch das gleichzeitig beschleunigte Absinken von luftgetragenen Stäuben, Keimen usw. durch die von oben einströmende geringfügig kühlere Frischluft verbessert.

Die vorgestellte Lüftungseinrichtung lässt sich auch mit geringem Aufwand in Altbauten kostengünstig nachrüsten, wobei die Zentraleinheit 20 vorzugsweise in der Nähe von Fenstern eingebaut wird.

### Bezugszeichenliste Lüftungseinrichtung

- 1: Innenräume, Belüftungsräume (Wohn- oder Geschäftsräume)
- 2: Belüftungseinrichtung für Frischluft, bestehend aus 4, 5, 7, 8, 10, 13
- 3: Ablufteinrichtung für Abluft, bestehend aus 6, 4, 5, 9, 11, 14
- 4: Wärmetauscher, Wärmetauscheinrichtung, Kreuzwärmetauscher
- 5: Luftführungskanäle, 8, 11 (Frischluft, Abluft)
- 6: Bodenansaugeinrichtung, Bodeneinlass 5, 9, 11
- 7: Frischluftauslass, Tellerventil, im Deckenbereich von 1
- 8: Frischluftkanal (Zuluftrohr), für Frischluft
- 9: Abluftansaugeinsatz im Bodenbereich 12, ggf. Filter
- 10: Frischluftansaugleitung mit 13
- 11: Abluftkanal, Abluftführung, Entlüftung
- 12: Bodenbereich (unterer Raumbereich, Wände von 1, Fußboden 16)
- 13: Frischlufteinlass (Lüftungsgitter, Luftfilter)
- 14: Abluftauslass in 15
- 15: Gebäudeumgebung, Außenbereich des Gebäudes
- 16: Fußboden von 1
- 17: Deckenbereich des Innenraums 1, Raumdecke und obere Seitenwände
- 18: Frischluft
- 19: Abluft, Raumabluft von 1
- 20: Steuereinheit, Zentraleinheit mit 4 und Teilen von 2, 3

## Patentansprüche

1. Lüftungseinrichtung für Innenräume (1) von Wohn- und Geschäftsgebäuden, umfassend eine Belüftungseinrichtung (2), welche Frischluft aus der Gebäudeumgebung (15) in die Innenräume (1) leitet, eine Ablufteinrichtung (3), welche die verbrauchte Luft aus den Innenräumen (1) entfernt, wobei beide Einrichtungen (2, 3) ein- oder mehrere Luftführungskanäle (5) zur Zuführung von Frischluft (18) und Abführung von Abluft (19) aufweisen und über eine Wärmetauscheinrichtung (4) zur Einsparung von Heizenergie geführt werden,
**dadurch gekennzeichnet, dass**
die Ablufteinrichtung (3) als eine Bodenansaugeinrichtung (6) zur Absaugung verbrauchter Luft und CO₂-Gas im Bodenbereich (12) eines Innenraumes (1) ausgebildet ist und die Belüftungseinrichtung (2) zur Abgabe von Frischluft (18) über den Deckenbereich der Raumdecke (17) eines Innenraumes (1) ausgebildet ist, wobei die Luftführungskanäle (5) als Frischluftkanäle (8) und Abluftkanäle (11) ausgebildet sind, welche zur Wärmerückgewinnung über eine Wärmetauscheinrichtung (4) geführt werden, wobei
an deren jeweiligen Ansaugende der Abluftkanäle (11) ein- oder mehrere Abluftansaugeinsätze (9) zur Absaugung von CO₂ belasteter Abluft (19) angeordnet sind, wobei sowohl die Abluftkanäle (11), als auch die Abluftansaugeinsätze (9) vollständig oder teilweise in den Fußboden (16) oder in die Seitenwände des Bodenbereichs (12) integriert sind, und wobei ein- oder mehrere Messeinrichtungen zur Bestimmung der Innenraumfeuchtigkeit und des CO₂-Gehalts vorgesehen und mit der Steuereinheit (20) zur Regelung des CO₂-Gehalts im Innenraum verbunden sind.

2. Lüftungseinrichtung nach Anspruch 1,
**dadurch gekennzeichnet, dass**
die wesentlichen Komponenten (2, 3, 4, 20) der Lüftungseinrichtung mit dem jeweiligen Frischlufteinlass (13), dem Abluftauslass (14), sowie deren Abschnitte der Luftführungskanäle (5, 8) bei mehrgeschossigen Häusern, in einem der oberen Geschosse angeordnet sind,
wobei die Leitungsführung von ein- oder mehreren Abluftkanälen (11), ausgehend von der Zentraleinheit (20), zur effizienten Abführung der Abluft in die Gebäudeumgebung (15) zur Dachfläche und über das Dach erfolgt,
wobei der Abluftauslass (14) entfernt von dem Frischlufteinlass (13) angeordnet ist.

3. Lüftungseinrichtung nach Anspruch 1 oder 2,
**dadurch gekennzeichnet, dass**
die Belüftungseinrichtung (2) ein- oder mehrere Frischluftkanäle (8) mit jeweils mindestens einem Frischluftauslass (7) zur Abgabe von Frischluft (18) an deren Leitungsende aufweist, welche im Raumdeckenbereich (17) des Raumes (1) angeordnet sind, wobei die Frischluftkanäle (8) über eine Wärmetauscheinrichtung (4) mit einer Frischluftansaugleitung (10) und deren Frischlufteinlass (13) zum Ansaugen von Frischluft (18) aus der Gebäudeumgebung (15) verbunden ist, und wobei der Frischlufteinlass (13) einen Luftfilter zum Schutz der Wärmetauscheinrichtung (4) vor Stäuben aufweist, und wobei der Frischlufteinlass (13) entfernt von dem Abluftauslass (14) angeordnet ist, um Frischluft mit geringer CO₂-Konzentration anzusaugen.

4. Verfahren zum Betrieb einer Lüftungseinrichtung nach einem der vorhergehenden Ansprüche 1 bis 3,
**dadurch gekennzeichnet, dass**
der verbrauchten Abluft (19) im Bodenbereich (12) eines oder mehrerer Innenräume (1) eines Gebäudes abgesaugt und in eine vom Gebäude und dem Frischlufteinlass (13) beabstandete Gebäudeumgebung (15) entlüftet wird,
wobei der Abluftauslass (14) bei Anordnung der Ablufteinrichtung (3) in einem Obergeschoss über eine Dachfläche des Gebäudes erfolgt,
und wobei der CO₂-Gehalt kontinuierlich oder in bestimmten Abständen gemessen, an die Steuereinheit 20 übermittelt und zur Steuerung der Lüftungseinrichtung verwendet wird.

5. Verfahren nach Anspruch 4,
**dadurch gekennzeichnet, dass**
die Lüftungseinrichtung nach den Ansprüchen 1 bis 3
zur effektiven Verminderung des CO₂-Gehalts in Innenräumen (1) in ein- oder mehreren Betriebsmodi zur Einstellung der Luftwechselrate gefahren wird, wobei mindestens eine permanente Grundeinstellung für ein bestimmtes CO₂-Niveau und ein- oder mehrere weitere Betriebsmodi für eine erhöhte Luftwechselrate einstellbar sind, und wobei ein Wechsel zwischen dem Betriebsmodus der Grundeinstellung und den weiteren einzelnen Betriebsmodi in Abhängigkeit von gemessenen CO₂-Konzentration der Innenraumatmosphäre einstellbar ist.

6. Verfahren nach Anspruch 5,
**dadurch gekennzeichnet, dass**
der Betrieb der Lüftungseinrichtung in der Grundeinstellung permanent aufrechterhalten wird, um die Bildung von H₂CO₃ aus den im Innenraum vorhandenen CO₂-Gas und Wasserdampf zu vermeiden.
